(19) Europäisches Patentamt
European Patent Office
Office européen des brevets

(11) **EP 2 732 140 B1**

(12) **EUROPÄISCHE PATENTSCHRIFT**

(45) Veröffentlichungstag und Bekanntmachung des Hinweises auf die Patenterteilung:
**11.08.2021   Patentblatt 2021/32**

(21) Anmeldenummer: **12730952.4**

(22) Anmeldetag: **28.06.2012**

(51) Int Cl.:
*F01K 23/06* *(2006.01)*          *F01K 23/10* *(2006.01)*
*F01K 25/08* *(2006.01)*          *F02G 5/02* *(2006.01)*

(86) Internationale Anmeldenummer:
**PCT/EP2012/062574**

(87) Internationale Veröffentlichungsnummer:
**WO 2013/007530 (17.01.2013 Gazette 2013/03)**

(54) **VERFAHREN ZUR REGELUNG EINER WÄRMENUTZUNGSVORRICHTUNG BEI EINER BRENNKRAFTMASCHINE**

METHOD FOR CONTROLLING A HEAT RECOVERY DEVICE IN AN INTERNAL COMBUSTION ENGINE

PROCÉDÉ DE RÉGULATION D'UN DISPOSITIF DE RÉCUPÉRATION DE CHALEUR POUR UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2011   AT 10342011**

(43) Veröffentlichungstag der Anmeldung:
**21.05.2014   Patentblatt 2014/21**

(73) Patentinhaber: **AVL List GmbH**
**8020 Graz (AT)**

(72) Erfinder:
• **NEUNTEUFL, Klemens**
**A-8052 Graz (AT)**
• **THEISSL, Helmut**
**A-8063 Hart-Purgstall (AT)**
• **STEVENSON, Philip Mark**
**A-8063 Höf-Präbach (AT)**

(74) Vertreter: **Babeluk, Michael et al**
**Florianigasse 26/3**
**1080 Wien (AT)**

(56) Entgegenhaltungen:
EP-A1- 1 323 990          EP-A1- 1 431 523
EP-A1- 1 536 104          WO-A1-2011/128360
DE-A1-102008 057 202      US-A1- 2005 247 056
US-A1- 2006 254 276       US-A1- 2010 287 920

## Beschreibung

Die Erfindung betrifft ein Verfahren zur Regelung einer Wärmenutzungsvorrichtung bei einer Brennkraftmaschine, insbesondere eines Kraftfahrzeuges, wobei die Wärmenutzungsvorrichtung einen Kreislauf für ein Arbeitsmedium, mit einem in einem Abgasströmungsweg der Brennkraftmaschine angeordneten Verdampfer einer Expansionsmaschine, einem Kondensator, einem Ausgleichsbehälter, und einer Speisepumpe, aufweist, wobei die Arbeitstemperatur des Arbeitsmediums durch Verändern des Arbeitsmediummassenstromes in Abhängigkeit zumindest eines Betriebsparameters geregelt wird, wobei ein Sollwert des Arbeitsmediummassenstromes durch die Verdampfer eines Abgasströmungsweges eines Abgasstranges und einer Abgasrückführleitung aufgrund eines Basissollwertes für den Arbeitsmediummassenstrom berechnet wird, wobei der Basissollwert für den Arbeitsmediummassenstrom zumindest eine Funktion der Abgastemperatur, vorzugsweise vor dem Verdampfer, und des Abgasmassenstromes im Abgasströmungsweg ist, wobei zum Basissollwert des Arbeitsmediummassenstromes zumindest ein Korrekturwert addiert wird.

Es ist bekannt, die im Abgassystem und/oder Abgasrückführungssystem (AGR - System) einer Brennkraftmaschine enthaltene thermische Energie in mechanische Leistung umzuwandeln.

Die DE 10 2009 020 615 A1 beschreibt eine Abgaswärmenutzungsvorrichtung eines Kraftfahrzeuges mit einem Abgaswärmenutzungs-Kreislauf, bei dem eine Arbeitstemperatur eines Arbeitsmediums des Abgaswärmenutzungs-Kreislaufes geregelt wird. Dabei wird durch Anpassung eines durch den Wärmetauscher des Abgaswärmenutzungs-Kreislaufes strömenden Massenstroms des Arbeitsmediums die Arbeitstemperatur so geregelt, dass eine maximal zulässige Arbeitstemperatur des Arbeitsmediums nicht überschritten wird.

Aus der EP 2 249 017 A ist eine ähnliche Abwärmenutzungseinrichtung mit einem Verdampfer zur Absorption von Abwärme einer Brennkraftmaschine bekannt, wobei der Durchfluss von Arbeitsmedium so geregelt wird, dass das Arbeitsmedium, welches im Verdampfer verdampft wird, in einem überhitzten Zustand in einen im Abgasstrom angeordneten Erhitzer gelangt, wenn das Arbeitsmedium in den Verdampfer bei oder unterhalb einer vorbestimmten Durchflussrate eintritt, bei welcher das Arbeitsmedium eine vorbestimmte maximale Wärmemenge absorbieren kann. Die Durchflussrate des Arbeitsmediums wird so geregelt, dass oberhalb der vorbestimmten Durchflussrate das Arbeitsmedium den Verdampfer durchflutet und im Erhitzer verdampft wird und danach einen überhitzten Zustand erreicht.

Die EP 1 431 523 A1 beschreibt eine Temperaturregeleinrichtung für einen Verdampfer, wobei der Dampf unter Nutzung der Abgaswärme einer Brennkraftmaschine erzeugt wird. Die Arbeitstemperatur eines Arbeitsmediums wird durch Verändern des Massenstroms des Arbeitsmediums in Abhängigkeit zumindest eines Betriebsparameters geregelt. Die Veröffentlichung beschreibt damit eine klassische Reglerstruktur bestehend aus einer Vorsteuerung (F/F Feed Forward correction) plus Regler (F/B Feed Back Correction). Die F/F Correction wird als Funktion des Abgasmassenstromes und der Abgastemperatur berechnet, aber nicht korrigiert. Die F/F Correction basiert auf der Differenzbildung aus der Soll- und Istdampftemperatur.

Die EP 1 536 104 A1 offenbart ein Verfahren zur Regelung einer Wärmenutzungsvorrichtung bei einer Brennkraftmaschine, wobei die Wärmenutzungsvorrichtung einen Kreislauf für ein Arbeitsmedium mit einem in einem Abgasströmungsweg der Brennkraftmaschine angeordneten Verdampfer, einer Expansionsmaschine, einen Kondensator einem Ausgleichbehälter und einer Speisepumpe aufweist, Die Arbeitstemperatur des Arbeitsmediums wird durch Verändern des Massenstroms des Arbeitsmediums, unter anderem in Abhängigkeit der Abgastemperatur geregelt.

Weitere Abwärmenutzungseinrichtungen sind aus den Veröffentlichungen JP 2008 231 980 A, JP 58 023 210 A, US 2010/287920 A1, DE 10 2008 057202 A1, EP 1 323 990 A1, WO 2011/128360 A1, US 2006/254276 A1 und US 2005/247056 A1 bekannt.

Aufgabe der Erfindung ist es, auf eine geregelte Abwärmenutzung zu realisieren.

Diese Aufgabe wird durch das Verfahren nach Anspruch 1 erreicht, wobei erfindungsgemäß der Abgasmassenstrom in der Abgasrückführleitung aus den Größen Motordrehzahl, Motordrehmoment, Kraftstoffmasse, Luftzahl des Abgases, absoluter Ladedruck, Ladelufttemperatur und dem Füllungswirkungsgrad über ein Modell berechnet wird.

Um die Effekte aus der Überhitzung des Arbeitsmediums zu berücksichtigen, kann vorgesehen sein, dass zum Basissollwert des Arbeitsmediummassenstrom ein Überhitzungskorrekturwert addiert wird. Der Überhitzungskorrekturwert kann dabei aus einer abgasseitigen Temperaturdifferenz abgeleitet werden. Dadurch kann eine thermische Zerstörung eines in einem Abgasströmungsweg vorhandenen Verdampfers durch Überhitzung verhindert werden.

Um Sättigungseinflüsse zu berücksichtigen ist es vorteilhaft, wenn zum Basissollwert des Arbeitsmediummassenstromes ein Sättigungskorrekturwert addiert wird. Der Sättigungskorrekturwert aus einer vom Arbeitsmediumdruck abhängigen Sättigungstemperatur abgeleitet werden. Die Sättigungskorrektur verhindert das Auftreten von Nassdampfzuständen des Arbeitsmediums am Eingang der Expansionsmaschine. Dadurch wird eine mechanische Zerstörung der Expansionsmaschine unterbunden.

Der Abgasmassenstrom im Abgasstrang kann aus den Größen Abgaslambda und Kraftstoffmasse über ein Modell berechnet werden.

Aufwändige Abgasmassenstromsensoren können somit entfallen.

In weiterer Ausführung des erfindungsgemäßen Verfahrens kann vorgesehen sein, dass ein Istwert des Arbeitsmediummassenstroms durch den Verdampfer aus den Größen Ist-Ventilposition, Druck vor und nach dem Regelventil des Verdampfers, sowie dem Durchflusskoeffizienten des Regelventiles über ein Modell berechnet wird. Aufwändige Massenstromsensoren für das Arbeitsmedium können somit entfallen.

Schließlich können aus den Sollwerten und Istwerten der Arbeitsmediummassenströme Reglerabweichungen der Massenströme am Abgasverdampfer und AGR-Verdampfer gebildet und einem Regler, beispielsweise einem PID - Regler, zugeführt werden.

Die Erfindung wird im Folgenden anhand der Fig. näher erläutert. Es zeigen schematisch:

Fig. 1     das Schema der erfindungsgemäßen Wärmenutzungsvorrichtung;
Fig. 2     ein Regelungssystem für das Arbeitsmedium durch den Abgasverdampfer;
Fig. 3     die Berechnung des Basissollwertes des Arbeitsmediumstromes durch den Abgasverdampfer;
Fig. 4     die Berechnung der Überhitzungskorrektur des Arbeitsmediummassenstromes durch den Abgasverdampfer;
Fig. 5     die Berechnung der Sättigungskorrektur des Arbeitsmediummassenstromes durch den Abgasverdampfer;
Fig. 6     die Berechnung des Sollwertes des Arbeitsmediummassenstromes durch den Abgasverdampfer;
Fig. 7     die Regelung des Arbeitsmediummassenstromes durch den Abgasverdampfer;
Fig. 8     ein Regelungssystem für das Arbeitsmedium durch den AGR-Verdampfer;
Fig. 9     die Berechnung des Basissollwertes des Arbeitsmediummassenstromes durch den AGR-Verdampfer,
Fig. 10    die Berechnung der Überhitzungskorrektur des Arbeitsmediummassenstromes durch den AGR-Verdampfer;
Fig. 11    die Berechnung der Sättigungskorrektur des Arbeitsmediummassenstromes durch den AGR-Verdampfer;
Fig. 12    die Berechnung des Sollwertes des Arbeitsmediummassenstromes durch den AGR-Verdampfer;
Fig. 13    die Regelung des Arbeitsmediummassenstromes durch den AGR-Verdampfer;
Fig. 14    die Arbeitsmediumtemperatur als Funktion der gasseitigen Temperaturdifferenz;
Fig. 15    beispielhaft die Sättigungstemperatur als Funktion des Druckes bei Ethanol als Arbeitsmedium;
Fig. 16    eine Kennlinie für die Durchflusskoeffizienten der Regelventile; und
Fig. 17    ein Kennfeld für den Basissollwert für den Arbeitsmediummassenstrom am Beispiel des Abgasverdampfers.

Das erfindungsgemäße Verfahren zur Regelung einer Wärmenutzungsvorrichtung 1 für eine Brennkraftmaschine 10 weist eine Wärmenutzungsvorrichtung auf, die die Hauptkomponenten Abgasverdampfer 2, AGR-Verdampfer 3, Expansionsmaschine 4, Kondensator 5, Ausgleichbehälter 6, Speisepumpe 7, Regelungsventile 8, 9 mit Positionsrückmeldung, sowie nicht weiter dargestellte Temperatursensoren und Drucksensoren umfasst.

In den Verdampfern (Abgas- und AGR-Verdampfer 2, 3) wird ein Arbeitsmedium (zum Beispiel Wasser und/oder Ethanol) mit Hilfe der im Abgasmassenstrom $m'_A$ im Abgasströmungswegs eines Abgasstranges und/oder Abgasmassenstrom $m'_{AGR}$ einer Abgasrückführleitung enthaltenen thermischen Energie zum Verdampfen gebracht. Der Abgas- bzw. AGR-Verdampfer 2, 3 besteht dabei aus jeweils mindestens zwei Blöcken 2a, 2b, 2c,... bzw. 3a, 3b, 3c,

Der erzeugte Dampf wird einer Expansionsmaschine 4 (zum Beispiel einem Hubkolbenmotor) zugeführt und in mechanische Leistung umgewandelt. Anschließend wird das Arbeitsmedium in einem Kondensator 5 abgekühlt und einem Ausgleichsbehälter 6 zugeführt. Über zumindest eine Speisepumpe 7 wird das Arbeitsmedium aus dem Ausgleichsbehälter 6 entnommen und über Regelventile 8, 9 wieder dem Abgasverdampfer 2 und/oder AGR-Verdampfer 3 zugeführt (Dampfkreisprozess).

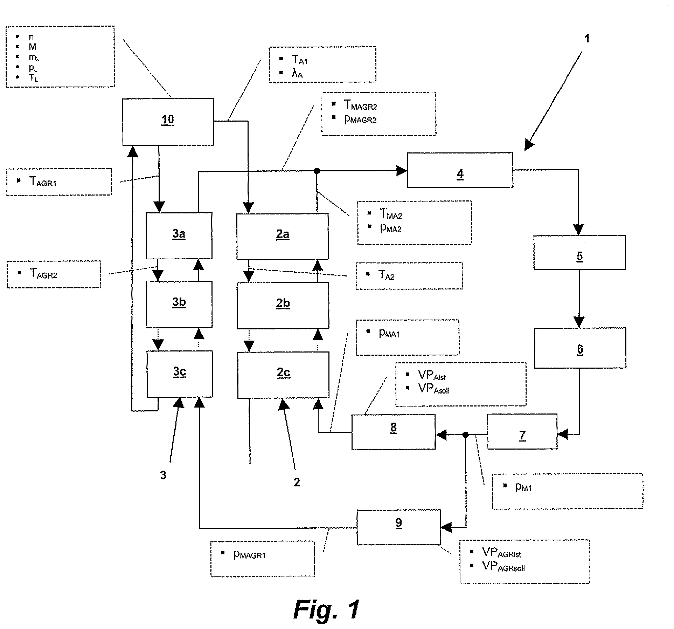

Zur Regelung der Wärmenutzungsvorrichtung 1 wird vor jedem Verdampfer 2, 3 ein kontinuierlich verstellbares Regelventil 8, 9 (zum Beispiel ein elektrisch betätigtes Nadelventil) eingesetzt. Über den Ventilöffnungsquerschnitt und den Druck des Arbeitsmediums vor und nach dem Regelventil 8, 9 wird der Arbeitsmediummassenstrom durch das Regelventil 8, 9 verändert. Weiters werden bestimmte Systemzustände (Drücke, Temperaturen und Ventilöffnung wie in Fig. 1 angegeben) messtechnisch erfasst und als Istwerte dem Reglersystem zur Verfügung gestellt.

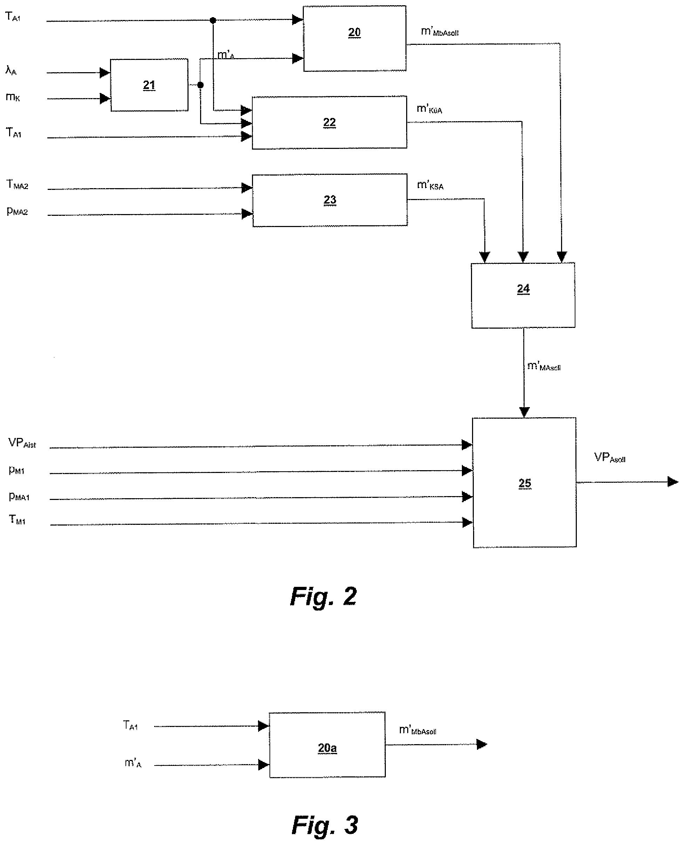

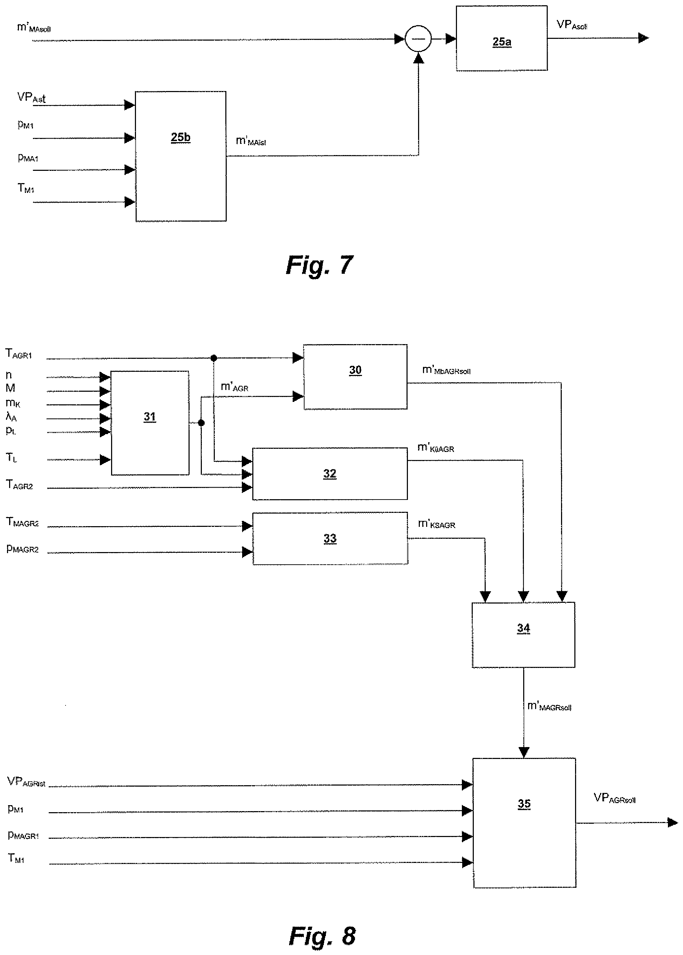

Das gesamte Reglersystem für den Abgasverdampfer 2 ist in Fig. 2 und jenes für den AGR - Verdampfer 3 in Fig. 8 dargestellt.

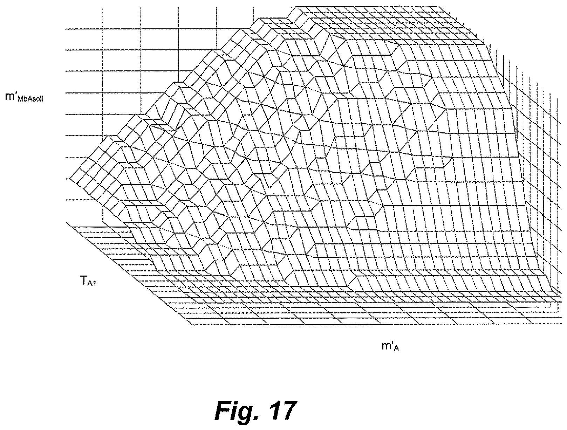

Im angewendeten Verfahren erfolgt in Schritt 20 bzw. 30 die Berechnung je eines Basissollwertes $m'_{MbAsoll}$, $m'_{MbAGRsoll}$ für das Arbeitsmedium durch den Abgasverdampfer 2 und AGR-Verdampfer 3. Für den Abgasverdampfer 2 wird dieser Basissollwert $m'_{MbAsoll}$ als Funktion des Abgasmassenstromes $m'_A$ im Abgasströmungsweg des Abgasstranges und der Abgastemperatur $T_{A1}$ am Abgasverdampfereingang berechnet. In der dargestellten Ausführung wird dazu beispielhaft ein Kennfeld 20a verwendet (Fig. 3 und Fig. 17). Der verwendete Abgasmassenstrom $m'_A$ im Abgasströmungsweg des Abgasstranges wird in Schritt 21 aus den Größen Abgaslambda $\lambda_A$ und Kraftstoffmasse $m_K$ abgeleitet.

$$m'_A = m_K \cdot \left(1 + \frac{1}{f_s \cdot \lambda_A}\right)$$

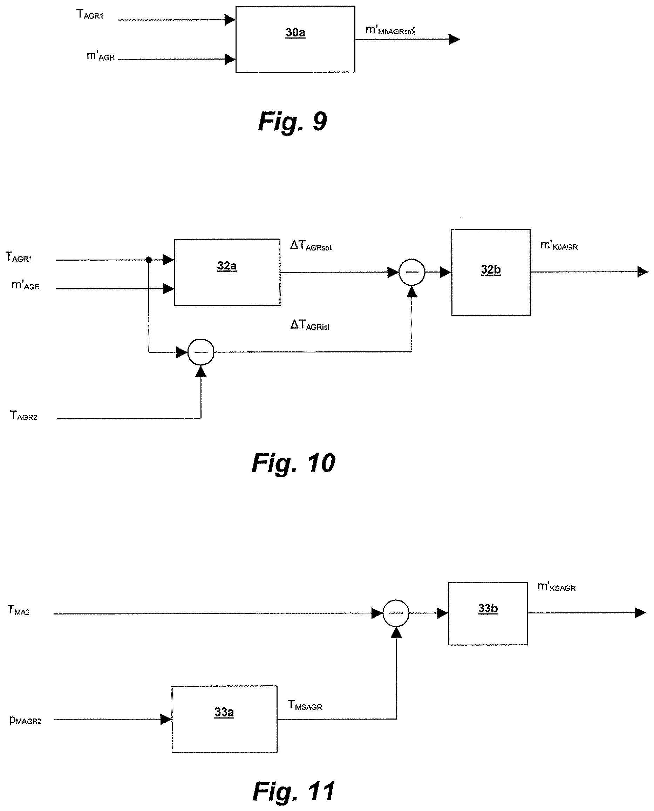

Für den AGR - Verdampfer 3 wird der Basissollwert m'$_{MbAGRsoll}$ als Funktion des Abgasmassenstromes m'$_{AGR}$ und der Gastemperatur T$_{AGR1}$ am AGR - Verdampfereingang berechnet. In der dargestellten Ausführung wird dazu ein Kennfeld 30a verwendet (Fig. 9). Der verwendete Abgasmassenstrom m'$_{AGR}$ wird in Schritt 31 aus den Größen Motordrehzahl n, Motordrehmoment M, Kraftstoffmasse m$_K$, Abgaslambda λ$_A$, absolute Ladedruck p$_L$, und Ladelufttemperatur T$_L$, und dem Füllungswirkungsgrad η$_F$ über ein Modell berechnet. Der Füllungswirkungsgrad η$_F$ wird dabei als Funktion von Motordrehzahl n und Motormoment M berechnet (zum Beispiel in einem Kennfeld hinterlegt)

$$\rho_{SR} = \frac{p_L}{T_L \cdot R_{SR}}$$

$$L_{SR} = \frac{m_K \cdot \lambda_A \cdot f_S \cdot 2}{\rho_{SR} \cdot n \cdot V_H}$$

$$\eta_F = f(n,M)$$

$$r_{AGR} = \eta_F - L_{SR}$$

$$m'_{AGR} = \frac{r_{AGR} \cdot m_K \cdot \lambda_A \cdot f_S}{1 - r_{AGR}}$$

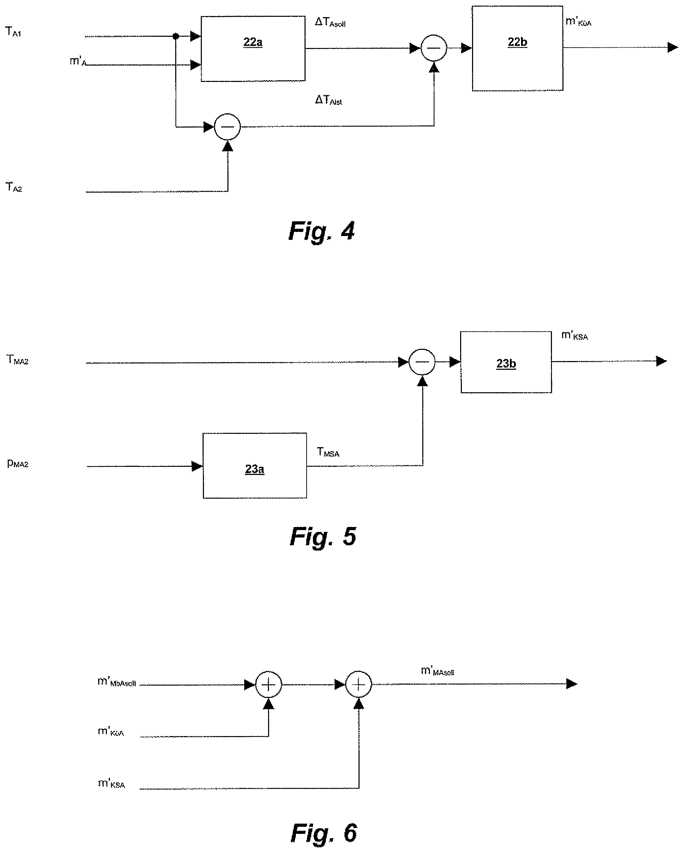

Weiters wird für den Arbeitsmediummassenstrom durch den Abgasverdampfer 2 und AGR-Verdampfer 3 in Schritt 22 bzw. 32 je eine Überhitzungskorrektur m'$_{KüA}$, m'$_{KüAGR}$ berechnet (Fig. 4 und Fig. 10). Die Überhitzungskorrektur m'$_{KüA}$, m'$_{KüAGR}$ erfolgt, um die Arbeitsmediumtemperatur am Ausgang des Abgasverdampfers 2 und AGR-Verdampfers 3 auf die jeweils gewünschten Werte einzustellen.

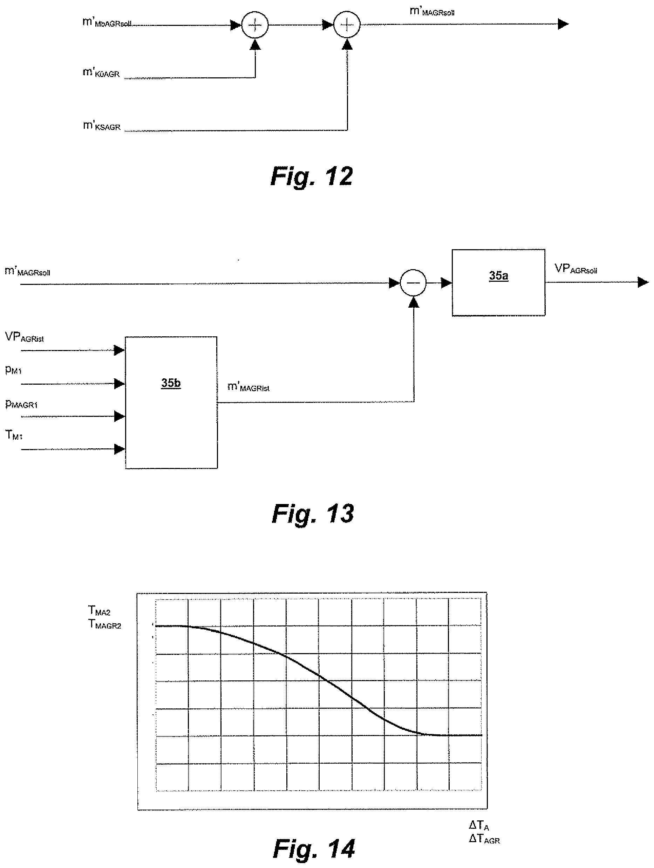

Dazu wird der Effekt genutzt, dass die Arbeitsmediumtemperatur T$_{MA2}$, T$_{MAGR2}$ am Ausgang eines Verdampfers 2, 3 an die gasseitige Temperaturdifferenz Δ$_{TA}$ = Δ$_{TA1}$- Δ$_{TA2}$, ΔT$_{AGR}$ = ΔT$_{AGR1}$-ΔT$_{AGR2}$ über den letzten Verdampferblock 2a, 3a (Fig. 1) gekoppelt ist. Dieser Effekt ist beispielhaft in Fig. 14 dargestellt. Die Berechnung der Überhitzungskorrektur m'$_{KüA}$, m'$_{KüAGR}$ erfolgt durch Bildung eines Sollwertes ΔT$_{Asoll}$, ΔT$_{AGRsoll}$ für die gewünschte gasseitige Temperaturdifferenz am AGR- und Abgasverdampfer.

Für den Abgasverdampfer 2 wird in Schritt 22a dieser Sollwert ΔT$_{Asol}$ der Temperaturdifferenz als Funktion des Abgasmassenstromes m'$_A$ und der Abgastemperatur T$_{A1}$ am Abgasverdampfereingang berechnet. In der dargestellten Ausführung wird dazu beispielhaft ein Kennfeld verwendet (Fig. 4).

Für den AGR-Verdampfer 3 wird in Schritt 32a der Sollwert ΔT$_{AGRsoll}$ der Temperaturdifferenz als Funktion des AGR - Massenstromes m'$_{AGR}$ und der Gastemperatur T$_{AGR1}$ am AGR-Verdampfereingang berechnet. In der dargestellten Ausführung wird dazu ein Kennfeld verwendet (Fig. 10).

Der aktuelle Istwert der Temperaturdifferenzen ΔT$_{Aist}$, ΔT$_{AGRist}$ wird jeweils aus den Temperaturen T$_{A1}$, T$_{AGR1}$ an den Verdampfereingängen und den Temperaturen T$_{A2}$, T$_{AGR2}$ nach dem ersten Verdampferblock 2c, 3c berechnet. Weiters wird aus den Sollwerten ΔT$_{Asoll}$, ΔT$_{AGRsoll}$ und den Istwerten ΔT$_{Aist}$, ΔT$_{AGRist}$ jeweils eine Reglerabweichung für den Abgasverdampfer und den AGR-Verdampfer 2, 3 gebildet. Diese Reglerabweichung wird in Schritt 22b bzw. 32b jeweils einem Temperaturregler (zum Beispiel PID - Regler) zugeführt. Der Ausgang dieser Temperaturregler ist die Überhitzungskorrektur m'$_{KüA}$, m'$_{KüAGR}$ für den Abgasverdampfer und den AGR-Verdampfer 2, 3.

Weiters wird für den Arbeitsmediummassenstrom durch den Abgasverdampfer 2 und den AGR-Verdampfer 3 in Schritt 23 bzw. 33 je eine Sättigungskorrektur m'$_{KSA}$, m'$_{KSAGR}$ berechnet (Fig. 5 und Fig. 11). Die Sättigungskorrektur m'$_{KSA}$, m'$_{KSAGR}$ erfolgt, um die Arbeitsmediumtemperatur T$_{MA2}$, T$_{MAGR2}$ am Ausgang des Abgasverdampfers 2 und AGR-Verdampfers 3, sicher über den Sattdampftemperaturen T$_{MSA}$ und T$_{MSAGR}$ zu halten.

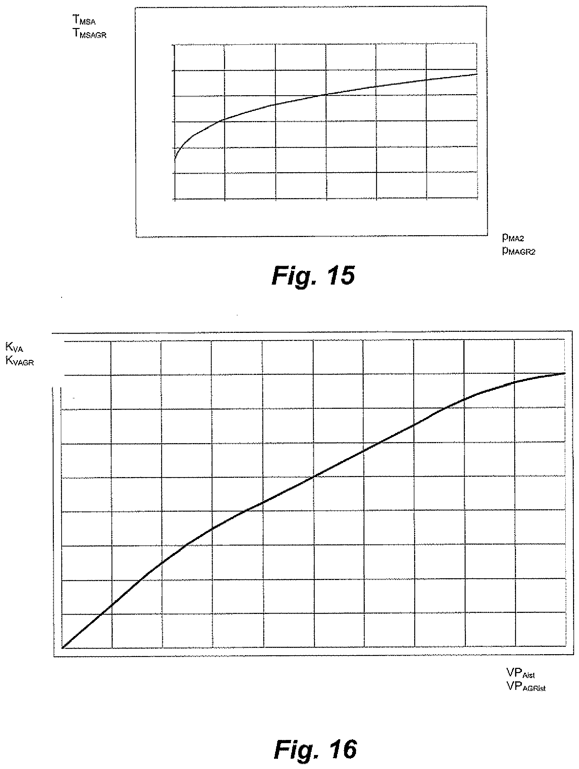

Dazu wird als Funktion der Arbeitsmediumdrücke p$_{MA2}$, p$_{MAGR2}$ an den Verdampferausgängen zunächst in Schritt 23a, bzw. 33a die jeweilige Sattdampftemperatur T$_{MSA}$ und T$_{MSAGR}$ berechnet (zum Beispiel Ethanol in Fig. 15). Aus den aktuellen Arbeitsmediumtemperaturen T$_{MA2}$, T$_{MAGR2}$ an den Verdampferausgängen und den ermittelten Sattdampftemperaturen T$_{MSA}$ und T$_{MSAGR}$ werden die Differenzen gebildet und diese in Schritt 23b, 33b einer Korrekturfunktion zugeführt (zum Beispiel Korrekturkennlinien).

Das Ergebnis dieser Korrekturfunktionen ist die Sättigungskorrektur m'$_{KSA}$, m'$_{KSAGR}$ der Arbeitsmediummassenströme für den Abgasverdampfer 2 und den AGR-Verdampfer 3.

Weiters wird aus dem Basissollwert m'$_{MbAsoll}$, m'$_{MbAGRsoll}$, der Überhitzungskorrektur m'$_{KüA}$, m'$_{KüAGR}$ und der Sättigungskorrektur m'$_{KSA}$, m'$_{KSAGR}$ in Schritt 24 bzw. 34 der endgültige Sollwert für den Arbeitsmediummassenstrom m'$_{MAsoll}$, m'$_{MAGRsoll}$ berechnet. Diese Berechnung erfolgt durch eine Addition von Basissollwert m'$_{MbAsoll}$, m'$_{MbAGRsoll}$, Überhitzungskorrektur m'$_{KüA}$, m'$_{KüAGR}$ und Sättigungskorrektur m'$_{KSA}$, m'$_{KSAGR}$ (Fig. 6 und Fig. 12). Als Ergebnis steht nun der Sollwert des Arbeitsmediummassenstromes m'$_{MAsoll}$, m'$_{MAGRsoll}$ durch den Abgasverdampfer 2 und den AGR-Verdampfer 3 zur Verfügung.

Aus diesen Sollwerten m'$_{MAsoll}$, m'$_{MAGRsoll}$ und den aktuellen Istwerten m'$_{MAist}$, m'$_{MAGRist}$ der Arbeitsmediummassenströme werden die Reglerabweichungen der Massenströme am Abgasverdampfer 2 und AGR-Verdampfer 3 gebildet und einem Regler 25a, 35a (zum Beispiel PID - Regler) zugeführt. Im Schritt 25a und 35b erfolgt die Berechnung der Sollpositionen V$_{PAsoll}$, V$_{PAGRsoll}$ der Regelventile 8, 9 (Fig. 7 und Fig. 13).

Die Istwerte m'$_{MAist}$, m'$_{MAGRist}$ der Arbeitsmediummassenströme werden in Schritt 25 bzw. 35 als Funktion von den Ist-Positionen VPAist, V$_{PAGRist}$ der Regelventile 8, 9, den Drücken p$_{M1}$; p$_{MA1}$, p$_{MAGR1}$ vor und nach den Regelventilen 8, 9 und den Durchflusskoeffizienten K$_{VA}$, K$_{VAGR}$ der Regelventile 8, 9 über ein Modell 25b bzw. 35b berechnet. Die Durchflusskoeffizienten K$_{VA}$, K$_{VAGR}$ der Regelventile 8, 9 werden als Funktion der Ist-Positionen V$_{PAist}$, V$_{PAGRist}$ berechnet (zum Beispiel in einer Kennlinie hinterlegt Fig. 16).

$$m'_{MAist} = \sqrt{\frac{(p_{M1} - p_{MA1}) \cdot 1000}{\rho_M}} \cdot K_{VA}$$

$$K_{VA} = f(VP_{Aist})$$

$$m'_{MAGRist} = \sqrt{\frac{(p_{M1} - p_{MAGR1}) \cdot 1000}{\rho_M}} \cdot K_{VAGR}$$

$$K_{VAGR} = f(VP_{AGRist})$$

Die Ausgänge der beiden Massenstromregler geben jeweils eine Sollposition für die Regelventile 8, 9 vor den jeweiligen Verdampfern 2, 3 vor.

Liste der Abkürzungen und Bezugszeichen:

| | |
|---|---|
| 1 | Wärmenutzungsvorrichtung |
| 2 | Abgasverdampfer |
| 3 | AGR-Verdampfer |
| 4 | Expansionsmaschine |
| 5 | Kondensator |
| 6 | Ausgleichsbehälter |
| 7 | Speisepumpe |
| 8 | Regelventil für Arbeitsmedium vor Abgasverdampfer |
| 9 | Regelventil für Arbeitsmedium vor AGR-Verdampfer |
| 10 | Brennkraftmaschine |
| 20, 20a, 21, 22, 22a, 22b, 23, 23a, 23b, 24, 25 | Schritte |
| 30, 30a, 31, 32, 32a, 32b, 33, 33a, 33b, 34, 35 | Schritte |
| 22b, 32b | ΔT - Regler |
| 25a, 35a | Massenstrom - Regler |
| 21, 25b, 31, 35b | Modell |
| n | Motordrehzahl |
| M | Motormoment |
| m$_K$ | Kraftstoffmasse |
| p$_L$ | absoluter Ladedruck |
| T$_L$ | Ladetemperatur |
| T$_{A1}$ | Abgastemperatur vor Abgasverdampfer |
| T$_{A2}$ | Abgastemperatur im Abgasverdampfer |
| ΔT$_{Asoll}$ | Sollwert der Temperaturdifferenz im Abgasverdampfer |

| | |
|---|---|
| $\Delta T_{Aist}$ | Istwert der Temperaturdifferenz im Abgasverdampfer |
| $T_{AGR1}$ | Abgastemperatur vor AGR-Verdampfer |
| $T_{AGR2}$ | Abgastemperatur im AGR-Verdampfer |
| $\Delta T_{AGRsoll}$ | Sollwert der Temperaturdifferenz im AGR-Verdampfer |
| $\Delta T_{AGRist}$ | Istwert der Temperaturdifferenz im AGR-Verdampfer |
| $T_{MSA}$ | Sättigungstemperatur des Arbeitsmediums nach Abgasverdampfer |
| $T_{MSAGR}$ | Sättigungstemperatur des Arbeitsmediums nach AGR-Verdampfer |
| $T_{MA2}$ | Arbeitsmediumtemperatur nach Abgasverdampfer |
| $T_{MAGR2}$ | Arbeitsmediumtemperatur nach AGR-Verdampfer |
| $p_{M1}$ | Arbeitsmediumdruck vor den Regelventilen |
| $p_{MA1}$ | Arbeitsmediumdruck nach Regelventil des Abgasverdampfers |
| $p_{MA2}$ | Arbeitsmediumdruck nach Abgasverdampfer |
| $p_{MAGR1}$ | Arbeitsmediumdruck nach Regelventil des AGR-Verdampfers |
| $p_{MAGR2}$ | Arbeitsmediumdruck nach AGR-Verdampfer |
| $VP_{Aist}$ | Ist-Position des Regelventils des Abgasverdampfers |
| $VP_{Asoll}$ | Soll-Position des Regelventils des Abgasverdampfers |
| $VP_{AGRist}$ | Ist-Position des Regelventils des AGR-Verdampfers |
| $VP_{AGRsoll}$ | Soll-Position des Regelventils des AGR-Verdampfers |
| $K_{VA}$ | Durchflusskoeffizient des Regelventiles des Abgasverdampfers |
| $K_{VAGR}$ | Durchflusskoeffizient des Regelventiles des AGR-Verdampfers |
| $\rho_M$ | Dichte des Arbeitsmediums vor den Regelventilen |
| $\lambda_A$ | Luftzahl des Abgases der Brennkraftmaschine |
| $R_{SR}$ | Gaskonstante im Saugrohr der Brennkraftmaschine |
| $f_S$ | stöchiometrischer Luftbedarf der Brennkraftmaschine |
| $\eta_F$ | Füllungswirkungsgrad der Brennkraftmaschine |
| $\rho_{SR}$ | Dichte im Saugrohr der Brennkraftmaschine |
| $L_{SR}$ | Liefergrad bezogen auf den Zustand im Saugrohr der Brennkraftmaschine |
| $V_H$ | Hubvolumen der Brennkraftmaschine |
| $m'_A$ | Abgasmassenstrom der Brennkraftmaschine |
| $m'_{MAsoll}$ | Sollwert des Arbeitsmediummassenstrom durch den Abgasverdampfer |
| $m'_{MAist}$ | Istwert des Arbeitsmediummassenstrom durch den Abgasverdampfer |
| $m'_{MbAsoll}$ | Basissollwert des Arbeitsmediummassenstrom durch den Abgasverdampfer |
| $m'_{KüA}$ | Überhitzungskorrektur für Abgasverdampfer |
| $m'_{KSA}$ | Sättigungskorrektur für Abgasverdampfer |
| $m'_{AGR}$ | Massenstrom der Abgasrückführleitung |
| $m'_{MAGRsoll}$ | Sollwert des Arbeitsmediummassenstrom durch den AGR-Verdampfer |
| $m'_{MAGRist}$ | Istwert des Arbeitsmediummassenstrom durch den AGR-Verdampfer |
| $m'_{MbAGRsoll}$ | Basissollwert des Arbeitsmediummassenstrom durch den AGR-Verdampfer |
| $m'_{KüAGR}$ | Überhitzungskorrektur für AGR-Verdampfer |
| $m'_{KSAGR}$ | Sättigungskorrektur für AGR-Verdampfer |

**Patentansprüche**

1. Verfahren zur Regelung einer Wärmenutzungsvorrichtung (1) bei einer Brennkraftmaschine (10), insbesondere eines Kraftfahrzeuges, wobei die Wärmenutzungsvorrichtung (1) einen Kreislauf für ein Arbeitsmedium, mit mehreren in einem Abgasströmungsweg der Brennkraftmaschine (10) angeordneten Verdampfern (2, 3), einer Expansionsmaschine (4), einem Kondensator (5), einem Ausgleichsbehälter (6), und einer Speisepumpe (7), aufweist, wobei die Arbeitsmediumtemperatur durch Verändern des Arbeitsmediummassenstromes in Abhängigkeit zumindest eines Betriebsparameters geregelt wird, wobei ein Sollwert ($m'_{MAsoll}$, $m'_{MAGRsoll}$) des Arbeitsmediummassenstromes durch die Verdampfer (2, 3) eines Abgasströmungsweges eines Abgasstranges und einer Abgasrückführleitung aufgrund eines Basissollwertes ($m'_{MbAsoll}$, $m'_{MbAGRsoll}$) für den Arbeitsmediummassenstrom berechnet wird, wobei der Basissollwert (m'$_{MbAsoll}$, m'$_{MbAGRsoll}$) für den Arbeitsmediummassenstrom zumindest eine Funktion der Abgastemperatur (T$_{A1}$, T$_{AGR1}$), vorzugsweise vor den Verdampfern (2, 3), und des Abgasmassenstromes (m'$_A$, m'$_{AGR}$) im Abgasströmungsweg ist, wobei zum Basissollwert (m'$_{MbAsoll}$, m'$_{MbAGRsoll}$) des Arbeitsmediummassenstromes zumindest ein Korrekturwert addiert wird, **dadurch gekennzeichnet, dass** der Abgasmassenstrom (m'$_{AGR}$) in der Abgasrückführleitung aus den Größen Motordrehzahl (n), Motordrehmoment (M), Kraftstoffmasse (m$_K$), Luftzahl des Abgases (λ$_A$), absoluter Ladedruck (p$_L$), Ladelufttemperatur (T$_L$) und dem Füllungswirkungsgrad (η$_F$) über ein Modell (31) berechnet wird.

2. Verfahren nach Anspruch 1, wobei zum Basissollwert (m'$_{MbAsoll}$, m'$_{MbAGRsoll}$) des Arbeitsmediummassenstromes ein Überhitzungskorrekturwert (m'$_{KüA}$, m'$_{KüAGR}$) addiert wird.

3. Verfahren nach Anspruch 2, wobei der Überhitzungskorrekturwert (m'$_{KüA}$, m'$_{KüAGR}$) aus einer abgasseitigen Temperaturdifferenz (ΔT$_A$, ΔT$_{AGR}$), vorzugsweise zwischen einer Abgastemperatur (T$_{A1}$, T$_{AGR1}$) vor den Verdampfern (2, 3) und einer Abgastemperatur (T$_{A2}$, T$_{AGR2}$) in den Verdampfern (2, 3) abgeleitet wird.

4. Verfahren einem der Ansprüche 1 bis 3, wobei zum Basissollwert (m'$_{MbAsoll}$, m'$_{MbAGRsoll}$) des Arbeitsmediummassenstromes ein Sättigungskorrekturwert (m'$_{KSA}$, m'$_{KSAGR}$) addiert wird.

5. Verfahren nach Anspruch 4, wobei der Sättigungskorrekturwert (m'$_{KSA}$, m'$_{KSAGR}$) aus einer vom Arbeitsmediumdruck (P$_{MA2}$, p$_{MAGR2}$) nach den Verdampfern (2, 3) abhängigen Sättigungstemperatur (T$_{MSA}$, T$_{MSAGR}$) abgeleitet wird.

6. Verfahren nach einem der Ansprüche 1 bis 5, wobei der Abgasmassenstrom (m'$_A$) im Abgasstrang aus den Größen Luftzahl des Abgases (λ$_A$) und Kraftstoffmasse (m$_K$) über ein Modell (21) berechnet wird.

7. Verfahren nach einem der Ansprüche 1 bis 6, wobei ein Istwert des Arbeitsmediummassenstromes (m'$_{MAist}$, m'$_{MAGRist}$) durch die Verdampfer (2, 3) aus den Größen Ist-Ventilposition (VP$_{Aist}$, VP$_{AGRist}$) sowie Druck (p$_{M1}$; p$_{MA1}$, p$_{MAGR1}$) vor und nach einem Regelventil (8, 9) der Verdampfer (2, 3) und einem Durchflusskoeffizient (K$_{VA}$, K$_{VAGR}$) des Regelventiles (8, 9) über ein Modell (25b, 35b) berechnet wird.

8. Verfahren nach Anspruch 7, wobei aus den Sollwerten (m'$_{MAsoll}$, m'$_{MAGRsoll}$) und Istwerten (m'$_{MAist}$, m'$_{MAGRist}$) der Arbeitsmediummassenströme Reglerabweichungen der Massenströme am Verdampfer (2) des Abgasstranges und am Verdampfer (3) der Abgasrückführleitung gebildet und einem Regler (25a, 35a) zugeführt werden.

**Claims**

1. Method for controlling a heat recovery device (1) in an internal combustion engine (10), in particular of a motor vehicle, wherein the heat recovery device (1) comprises a circuit for a working medium having a plurality of evaporators (2, 3) arranged in an exhaust gas flow path of the internal combustion engine (10), a condensor (5), an expansion tank (6), and a feed pump (7), wherein the temperature of the working medium is controlled by varying the working medium mass flow as a function of at least one operating parameter, wherein a setpoint value (m'$_{MAsoll}$, m'$_{MAGRsoll}$) of the working medium mass flow through evaporators (2, 3) of an exhaust gas flow path of an exhaust gas tract and an exhaust gas recirculation line is calculated on the basis of a base setpoint value (m'$_{MbAsoll}$, m'$_{MbAGRsoll}$) for the working medium mass flow, wherein the base setpoint value (m'$_{MbAsoll}$, m'$_{MbAGRsoll}$) for the working medium mass flow is at least a function of the exhaust gas temperature (T$_{A1}$, T$_{AGR1}$), preferably upstream of the evaporators (2, 3), and of the exhaust gas mass flow (m'$_A$, m'$_{AGR}$) in the exhaust gas flow path, wherein at least one correction value is added to the base setpoint value (m'$_{MbAsoll}$, m'$_{MbAGRsoll}$) of the working medium mass flow, **characterised in that** the exhaust gas mass flow (m'$_{AGR}$) in the exhaust gas recirculation line is calculated from the values for the motor speed (n), motor torque (M), fuel mass (m$_K$), exhaust gas air ratio (λ$_A$), absolute charging pressure (p$_L$), charge air temperature (T$_L$) and the admission efficiency (η$_F$) using a model (31).

2. Method according to claim 1, **wherein** an overheating correction value (m'$_{KüA}$, m'$_{KüAGR}$) is added to the base setpoint value (m'$_{MbAsoll}$, m'$_{MbAGRsoll}$) of the working medium mass flow.

3. Method according to claim 2, **wherein** the overheating correction value (m'$_{KüA}$, m'$_{KüAGR}$) is derived from the temperature difference (ΔT$_A$, ΔT$_{AGR}$) on the exhaust gas side, preferably between an exhaust gas temperature (T$_{A1}$, T$_{AGR1}$) upstream from the evaporators (2, 3) and an exhaust gas temperature (T$_{A2}$, T$_{AGR2}$) in the evaporators (2, 3).

4. Method according to one of claims 1 to 3, **wherein** a saturation correction value ($m'_{KSA}$, $m'_{KSAGR}$) is added to the base setpoint value ($m'_{MbAsoll}$, $m'_{MbAGRsoll}$) of the working medium mass flow.

5. Method according to claim 4, **wherein** the saturation correction value ($m'_{KSA}$, $m'_{KSAGR}$) is derived from a saturation temperature ($T_{MSA}$, $T_{MSAGR}$) dependent upon a working medium pressure ($p_{MA2}$, $p_{MAGR2}$) downstream from the evaporators (2, 3).

6. Method according to one of claims 1 to 5, **wherein** the exhaust gas mass flow ($m'_A$) in the exhaust gas tract is calculated from the values for the exhaust gas air ratio ($\lambda_A$) and the fuel mass ($m_K$) using of a model (21).

7. Method according to one of claims 1 to 6, **wherein** an actual value of the working medium mass flow ($m'_{MAist}$, $m'_{MAGRist}$) through the evaporators (2, 3) is calculated from the values for the actual valve position ($VP_{Aist}$, $VP_{AGRist}$) and pressure ($p_{M1}$; $p_{MA1}$, $p_{MAGR1}$) upstream and downstream from a control valve (8, 9) of the evaporators (2, 3) and a flow coefficient ($K_{VA}$, $K_{VAGR}$) of the control valve (8, 9) using a model (25b, 35b).

8. Method according to claim 7, **wherein** controller deviations of the mass flows in the evaporator (2) of the exhaust gas tract and in the evaporator (3) of the exhaust gas recirculation line are generated from the setpoint values ($m'_{MAsoll}$, $m'_{MAGRsoll}$) and actual values ($m'_{MAist}$, $m'_{MAGRist}$) of the working medium mass flows and are supplied to a controller (25a, 35a).

**Revendications**

1. Procédé de régulation d'un dispositif de récupération de chaleur (1) de moteur thermique (10), notamment d'un véhicule automobile,

   - le dispositif de récupération de chaleur (1) comportant un circuit de milieu actif avec plusieurs évaporateurs (2, 3) installés dans le chemin des gaz d'échappement du moteur thermique (10), une machine à expansion (4), un condenseur (5), un réservoir d'égalisation (6) et une pompe d'alimentation (7),
   la température du milieu actif étant régulée par la variation du débit massique de milieu actif en fonction d'au moins un paramètre de fonctionnement,
   - on calcule une valeur de consigne ($m'_{MAsoll}$, $m'_{MAGRsoll}$) du débit massique de milieu actif à travers les évaporateurs (2, 3) d'un chemin de gaz d'échappement d'une ligne de gaz d'échappement et une conduite de retour de gaz d'échappement sur le fondement d'une valeur de consigne de base ($m'_{MbAsoll}$, $m'_{MbAGRsoll}$) pour le débit massique de milieu actif,
   la valeur de base ($m'_{MbAsoll}$, $m'_{MbAGRsoll}$) du débit massique de milieu actif étant au moins une fonction de la température des gaz d'échappement ($T_{A1}$, $T_{AGR1}$), de préférence en amont des évaporateurs (2, 3) et du débit massique de gaz d'échappement ($m'_A$, $m'_{AGR}$) dans le chemin des gaz d'échappement,
   - on ajoute au moins une valeur correctrice à la valeur de consigne de base ($m'_{MbAsoll}$, $m'_{MbAGRsoll}$) du débit massique de milieu actif,
   procédé **caractérisé en ce que**
   on calcule le débit massique de gaz d'échappement ($m'_{AGR}$) dans la conduite de retour de gaz d'échappement à partir des grandeurs suivantes :

   régime moteur (n), couple moteur (M), masse de carburant ($m_k$), coefficient d'air des gaz d'échappement ($\lambda_A$) pression de suralimentation absolue ($p_L$), température de l'air de suralimentation ($T_L$) et rendement de remplissage ($\eta_F$) avec un modèle (31).

2. Procédé selon la revendication 1,
   selon lequel
   on ajoute une valeur correctrice de surchauffe ($m'_{KüA}$, $m'_{KüAGR}$) à la valeur de consigne de base ($m'_{MbAsoll}$, $m'_{MbAGRsoll}$) du débit massique de milieu actif.

3. Procédé selon la revendication 2,
   selon lequel
   on déduit la valeur correctrice de surchauffe ($m'_{KüA}$, $m'_{KüAGR}$) à partir d'une différence de température, côté gaz d'échappement, ($\Delta T_A$, $\Delta_{TAGR}$), de préférence entre la température de gaz d'échappement ($T_{A1}$, $T_{AGR1}$) en amont des évaporateurs (2, 3) et la température de gaz d'échappement ($T_{A2}$, TAGR2) dans les évaporateurs (2, 3).

**4.** Procédé selon l'une des revendications 1 à 3,
selon lequel
on ajoute une valeur correctrice de saturation ($m'_{KSA}$, $m'_{KSAGR}$) à la valeur de consigne de base ($m'_{MbAsoll}$, $m'_{MbAGRsoll}$) du débit massique de milieu actif.

**5.** Procédé selon la revendication 4,
selon lequel
on déduit la valeur correctrice de saturation ($m'_{KSA}$, $m'_{KSAGR}$) d'une température de saturation ($T_{MSA}$, $T_{MSAGR}$) de la pression du milieu actif ($p_{MA2}$, $p_{MAGR2}$) en aval des évaporateurs (2, 3).

**6.** Procédé selon l'une des revendications 1 à 5,
selon lequel
on calcule le débit massique de gaz d'échappement ($m'_A$) dans la ligne des gaz d'échappement à partir des grandeurs suivantes : coefficient d'air des gaz d'échappement ($\lambda_A$) et masse de carburant ($m_K$) avec un modèle (21).

**7.** Procédé selon l'une des revendications 1 à 6,
selon lequel
on calcule la valeur réelle du débit massique de milieu actif ($m'_{MAist}$, $m'_{MA\text{-}GRist}$) dans les évaporateurs (2, 3) à partir des grandeurs de la position réelle de la soupape ($VP_{Aist}$, $VP_{AGRist}$) ainsi que de la pression ($p_{M1}$ ; $p_{MA1}$, $p_{MAGR1}$) en amont et en aval d'une soupape de régulation (8, 9) des évaporateurs (2, 3) et d'un coefficient de passage ($K_{VA}$, $K_{VAGR}$) de la soupape de régulation (8, 9) avec un modèle (25b, 35b).

**8.** Procédé selon la revendication 7,
selon lequel
à partir des valeurs de consigne ($m'_{MAsoll}$, $m'_{MAGRsoll}$) et des valeurs réelles ($m'_{MAist}$, $m'_{MAGRist}$) des débits massiques de milieu actif, on forme les écarts de régulation des débits massiques sur l'évaporateur (2) de la ligne de gaz d'échappement et sur l'évaporateur (3) de la conduite de retour de gaz d'échappement et on les fournit à un régulateur (25a, 35a).

**Fig. 1**

*Fig. 2*

*Fig. 3*

$T_{A1}$

$m'_A$

$\Delta T_{Asoll}$

22a

$\Delta T_{Aist}$

22b

$m'_{KüA}$

$T_{A2}$

**Fig. 4**

$T_{MA2}$

$m'_{KSA}$

$p_{MA2}$

23a

$T_{MSA}$

23b

**Fig. 5**

$m'_{MbAsoll}$

$m'_{KüA}$

$m'_{KSA}$

$m'_{MAsoll}$

**Fig. 6**

*Fig. 7*

*Fig. 8*

**Fig. 9**

**Fig. 10**

**Fig. 11**

m'$_{MbAGRsoll}$

m'$_{KüAGR}$

m'$_{KSAGR}$

m'$_{MAGRsoll}$

**Fig. 12**

m'$_{MAGRsoll}$

VP$_{AGRist}$

p$_{M1}$

p$_{MAGR1}$

T$_{M1}$

**35b**

m'$_{MAGRist}$

**35a**

VP$_{AGRsoll}$

**Fig. 13**

T$_{MA2}$
T$_{MAGR2}$

ΔT$_{A}$
ΔT$_{AGR}$

**Fig. 14**

$T_{MSA}$
$T_{MSAGR}$

$p_{MA2}$
$p_{MAGR2}$

**Fig. 15**

$K_{VA}$
$K_{VAGR}$

$VP_{Aist}$
$VP_{AGRist}$

**Fig. 16**

*Fig. 17*

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009020615 A1
- EP 2249017 A
- EP 1431523 A1
- EP 1536104 A1
- JP 2008231980 A
- JP 58023210 A
- US 2010287920 A1
- DE 102008057202 A1
- EP 1323990 A1
- WO 2011128360 A1
- US 2006254276 A1
- US 2005247056 A1